# EUROPEAN PATENT APPLICATION

(11) **EP 1 845 502 A2**
(43) Date of publication of application: **17.10.2007**
(21) Application number: 07007412.5
(22) Date of filing: 11.04.2007
(51) Int. Cl.: G08G 1/01

(54) **Method, system and software product for controlling the handling of vehicles**

(30) Priority: 11.04.2006 FI 20060352
(71) Applicant: Tieliikelaitos, 00520 Helsinki (FI)
(72) Inventor: Sikander, Ilmari, 00500 Helsinki (FI)
(74) Representative: Simmelvuo, Markku Kalevi

(57) **Abstract**

In the method of the invention, vehicles are handled in queue number order at the handling point. The handling is allocated a queue number by sending a reservation request to the reservation system. In response to the request, the reservation system sends a queue number and/or an estimated handling time. According to the invention, the received queue number and/or the estimated handling time is updated as the handling proceeds at the handling site in a manner deviating from what was anticipated or, for example, based on a request received from the driver.

## Description

The present invention concerns a method, a system and a software product for handling vehicles in queue number order.

### BACKGROUND OF THE INVENTION

Heavy traffic is often forced to wait for its turn, for example, when waiting for border inspection at the border; when waiting for loading at the port or in some other loading place. At the border stations there may be even long periods of queuing due to unforeseeable capacity variations, for example, when the operations have come to a halt on the other side of the border. Queuing at the ports may in turn be due to the inoperability of the logistics while loading, with the port area, however, being limited.

Conventionally, in border crossing, the driver of a vehicle of heavy traffic issues himself/herself a queue number as he/she arrives at the checkpoint. While waiting for his/her own turn the driver can monitor how queues are progressing through a display panel. When it is his/her turn, the driver appears before the customs officer, who fills out the necessary details in the form of the workstation and marks the inspection as being made by ticking the queue ticket in order for the driver to be able to proceed.

Patent publication FI 112312 discloses a method and system for two-way transmission of data from a vehicle to an information system which determines the handling time of the vehicle. The customer uses his/her terminal device to send a short message (SMS) from his/her vehicle to the short message service centre of the telephone operator, from which the message is read into the information system of the service provider. Based on the information identifying the vehicle, contained in the short message, and the time of notification, the system processes the information; determines the moment of time of handling the vehicle; and enters the cargo of the vehicle in electronic documents. Feedback information (such as the moment of handling and the queue number) on the handling is sent to the terminal devices, which can display the feedback information by means of a personal medium of communication on public electronic display panels and terminal devices of a television.

In a prior-art system, the feedback information received by the driver is of a one-time nature, and the queue number contained in the given feedback and the moment of handling are determined at the moment of issuing. This is problematic especially in situations where, for some reason or another, the handling of a vehicle is either faster or slower than originally estimated when determining the moment of time of handling, or in case the driver is not able to arrive by the moment of time of handling determined for him/her. Therefore, the drivers are not able to foretell their arrival, in which case they may arrive at the handling site too late (with faster handling times) when it is no longer their turn, or they me be forced to queue even longer periods and congest the roads near to the handling site.

### SUMMARY OF THE INVENTION

The objective of the invention is to eliminate the disadvantages referred to above. One specific objective of the invention is to disclose a novel method and system for the control of vehicles at the handling site.

As for the features characteristic of the invention, reference is made to them in the claims.

In the method of the invention, vehicles are handled in order at handling site. One reserves one's turn for the handling by sending a request for reserving a time for handling to the system. In response to the request, the system sends a queue number and/or the estimated moment of time of handling. According to the method, an already issued queue number and/or the evaluated moment of time of handling can be updated in case the queues are progressing in a manner deviating from what was anticipated at the handling site and/or in accordance with what was wished for in the second request for handling.

According to one preferred embodiment of the invention, the request for reserving the handling is input by means of a portable terminal device and/or by means of a terminal device located at the remote point.

According to another embodiment of the invention, the updated queue number and/or the moment of time of handling are sent to a portable terminal device, to a terminal device disposed at the remote point and/or to an electronic display panel disposed at the remote point.

Further, according to a further embodiment of the invention, the queue number and/or the moment of time of handling are updated in case the handling of the vehicles proceeds more slowly or faster than estimated and/or in case the handling request contains a request for another handling time. The queue number can also be updated in case the handling of the vehicles proceeds more slowly or faster than estimated and in case the there is a wish to keep the original estimated handling time unchanged.

The invention also concerns a system for the control of the handling of vehicles. The system comprises means for receiving a request for handling from a terminal device for determining a queue number and/or an evaluated handling time, and for sending the determined queue number and/or the evaluated handling time to the terminal device. The terminal device can be a terminal device outside the system, such as a mobile station, or a terminal device included in the system, such as a computer. For example, the means refer to a server of the service provider, which receives information on the progress in the queue from the server of the handling site. On the other hand, the server can also be disposed in conjunction with the handling site, whereby it is notified of the progress in the queue directly. The aforementioned means have been arranged to update the reservation numbers and/or the handling times based on the situation with the queue numbers of the handling site and/or the received request for handling.

The invention also concerns a software product for the control of the handling of vehicles. The software product contains program code which, when executed in data processing equipment, has been arranged to perform the method steps presented in any one of the method claims of the present invention.

The method, system and software product of the invention can be utilized, for example, in the control of the border crossing traffic of a customs so that after its own input, the vehicle gets an answer concerning the estimated border crossing time. If the given queue number and/or border crossing time has to be changed, the driver is informed of the updated data and is able to better anticipate the driving time and thus reduce his/her own queuing time at the checkpoint.

The objective of the present invention is to eliminate the problems that have been presented in conjunction with the description of the prior art. In particular, the method of the present invention enables one to anticipate and control the arrival of vehicles at the handling site, thus reducing the queuing times at the handling site.

The method of the invention also has significant advantages compared to the prior art. In particular, the drivers of heavy-duty stock get updated information on how long a queuing time they should be expecting, making it possible for them to estimate their own travel time better so that they can be there (at the border, port, and the like) only when their own estimated handling time is approaching.

In addition, the method of the invention also reduces the risks of traffic, because as the drivers are able to estimate the queuing times better, the heavy traffic does not congest the traffic near to the handling sites. Minimizing of queues also reduces the problems caused by the queues to the local traffic, especially the problematic congestions in cities or in the vicinity of cities.

### LIST OF FIGURES

Fig. 1 shows one embodiment of the management system of the handling of vehicles; and
Fig. 2 shows one functional block diagram for implementing the method of the invention.

### DETAILED DESCRIPTION OF THE INVENTION

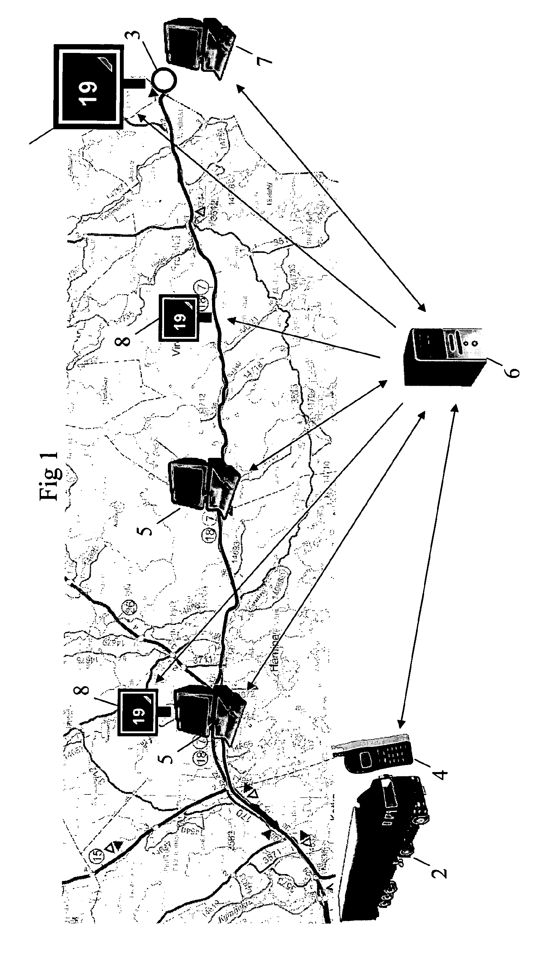

Fig. 1 shows one embodiment of the management system of vehicles, in which the queue number and the handling time can be updated based on information on the queue number. The method and system of the invention are utilized, for example, in the management of the frontier traffic of a customs.

The figure shows the route of a vehicle (2) to a handling site (3). The handling site can be, for example, a checkpoint and the handling refers to border inspection, for example. The driver of the vehicle (2) can reserve border inspection via his/her own terminal device (4) like a mobile station or at the remote point on a terminal device (5) itself or assisted by an official at the remote point. Based on the information identifying the vehicle, given in the request, as well as based on the time of notification and the queue number situation at the moment of time of notification, a reservation system (6) handles the request and determines a queue number and/or a handling time for the vehicle. In response to the request concerning the reservation of border inspection, the driver receives feedback comprising e.g. the queue number determined for the vehicle in question and/or the estimated time for the border inspection. When requesting for the handling (border inspection), one may also present a desired moment of time for the inspection, in which case the queue number is determined so that it corresponds, as well as possible, to the estimated queue number of the requested time.

As feedback to the handling request, each vehicle can be given a vehicle-specific ID identifier. As the driver's own handling time is approaching, he/she inputs the identifier into an information system (7) of the handling site using the terminal located in the vicinity of the handling site, so that the handling site is notified of the fact that the vehicle in question is there on site at the handling site. The given queue number can also function as an ID identifier. In the vicinity of the handling site, the driver can, in addition, monitor how queues are progressing through an electronic display panel (if such exists), which can, in addition, display information on how many vehicles there are left to be handled at the handling site.

While driving the driver of the vehicle (2) can follow up the updated information on the progressing in the queue at the handling site via his/her own terminal device (4), for example, by means of a text message, e-mail, or by means of a telephone service. The progressing in the queue can also be monitored by means of terminal devices (5) located at the remote points, or through electronic displays (8) disposed along the route.

When necessary, the vehicles can be allocated new handling times and/or queue numbers. If, for example, the handling proceeds slower/faster than estimated, the driver can be allocated a new handling time. In case, however, the driver wishes to keep the handling time unchanged and the handling of the vehicles has been slower/faster than estimated, the vehicle in question can be allocated a new queue number which is estimated to correspond to the new queue number of the already determined handling time. The queue number and/or handling time can also be updated based on a request received from the driver. The updated information on the new queue number and/or handling time can be transmitted to the driver's terminal device (2), to the terminal device (5) located at the remote point; and/or to an electronic display panel (8).

It is obvious that an actual system may comprise also such network elements that have not been presented in Fig. 1. An element such as this can be e.g. the mobile network operator's short message service centre disposed between the terminal device 4 and the server 6 or 7. In addition, it is obvious that an actual system need not necessarily contain all of the system elements presented in Fig. 1. In another embodiment of the invention, one or more display panels (8) may be lacking. In yet another embodiment, the system does not contain a remote point (5) at all. Instead the driver of the vehicle (2) reserves the border inspection via his/her terminal device (4).

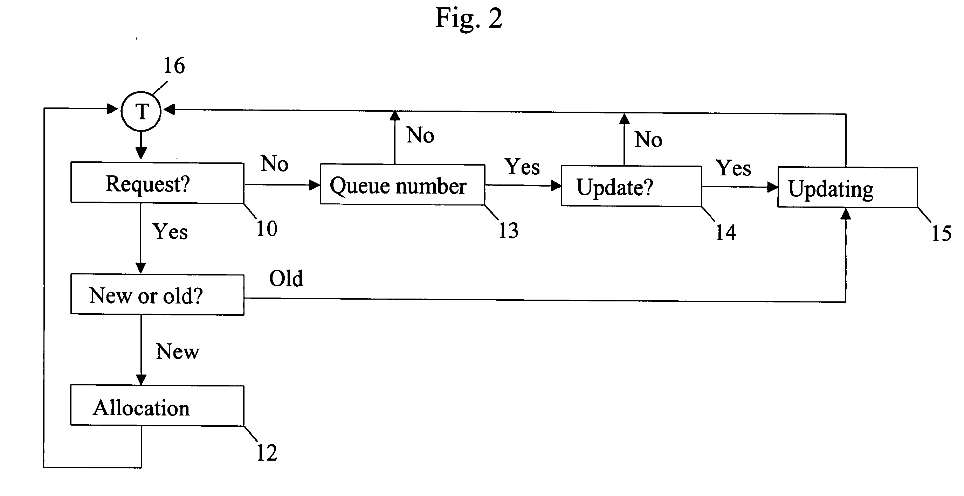

Fig. 2 shows, by way of example, a block diagram illustrating the functioning of the method of the invention. In the method of the invention, a request for reserving a handling is received (10), after which it is checked (11) whether the request was sent by a vehicle already having a queue number or whether the request is from such a vehicle that is not entered in the system yet. In case the request is a new handling request, the vehicle having sent the request is allocated a suitable queue number and/or a handling time (12); and the sender of the request is notified of this. If the request is from such a vehicle that has already been issued a queue number and/or a handling time, then the queue number and/or handling time can be updated (15) in accordance with the request. In the method of the invention, one can also monitor how the queues are progressing (13) at the handling site and determine the need for updates (14). In case the queues are progressing as planned, there is no need for an update. Instead, as the queues are progressing more slowly or faster than estimated, the system issues (15) new queue numbers and/or handling times instead of the already given queue numbers and/or handling times. Point 16 refers to the triggering point which creates the signal to be interpreted. The triggering may be caused by a handling request sent by the user or by an update request of the handling request. Similarly, as presented above, the triggering may also be caused by the fact that the actual speed at which the queue numbers are processed deviates from the originally estimated processing speed, and as a result of this, already allocated queue numbers and/or handling times are updated.

In the following section, examples of possible embodiments of the invention are presented. The examples are shown by way of example only and are not intended to limit the scope of the invention.

In a first example of the invention, the driver can inform the system of his/her arrival at the checkpoint on Tuesday and request a given border crossing time (e.g. Tuesday at 3 p.m.) at which he/she thinks he/she is ready for the border inspection. As feedback, the system gives queue number 200 and as the estimated border crossing time 3 p.m. If there will be queues at the border at some later point and the estimated border crossing times will not be applied, the system can issue each queue number an updated estimate of the new border crossing time, e.g. not until Wednesday morning at 8 a.m.

In a second example of the invention, the driver has requested border crossing and obtained queue number 200 and an estimated border crossing time for Tuesday 3 p.m. If, for some reason or another, the border inspection proceeds faster than expected (queue numbers remain unused or the cargo inspection is faster than expected) and the expected handling time of queue numbers is advanced, the driver can be given a new, earlier handling time.

In a third example of the invention, the driver has requested border inspection and has been given queue number 200 and an estimated border crossing time for Tuesday 3 p.m. If, for some reason or another, the border inspection proceeds faster than expected (queue numbers remain unused or the cargo inspection is faster than expected) and the expected handling time of queue numbers is advanced, the first given handling time can be kept unchanged and the driver can be allocated a new queue number. When necessary, the queue number can be updated as often as necessary in order that the original estimate will hold true. Allocation of a new queue number is so enabled that of the original queue numbers, a part like every tenth queue number is left unallocated.

In a fourth example of the invention, the driver has requested border inspection and has been given queue number 200 and an estimated border crossing time for Tuesday 3 p.m. If, however, it takes the driver longer to arrive than he/she expected and he/she does not make it to the checkpoint by Tuesday 3 p.m., he/she can notify the system thereof and request a new queue number e.g. for Tuesday 6 p.m. The allocation of the new queue number is made possible, for example, such that a part like every tenth queue number from the original queue numbers remains unallocated, thus enabling these "deviations" from the estimated border crossing time. Leaving part of the queue numbers unallocated for the purpose of making changes in the queue numbers, as shown above, is not the only way to solve the matter. Instead, any other suitable allocation solution can come into question.

While in the example shown above, the vehicle is a heavy-duty vehicle and the handling refers to border inspection of heavy traffic, the invention can also be applied to the management of other rolling stock, for example, at the port, to the logistics of unloading or loading cargo, or in the central warehouse of an enterprise, to the logistics of goods distribution. As shown in the foregoing, in the method and system of the invention, preferably a mobile network or an Internet network is used for the data transfer. It must, however, be noted that the method and system of the invention can be implemented using any technique suitable for the data transfer in accordance with the invention. Moreover, the functionality in accordance with the present invention can be implemented by means of one or more servers. In one embodiment of the invention, the reservation procedure and the updates of the queue number and/or the estimated handling time are made in one server, such as the application server of the service provider, or in the object's own server (e.g. the checkpoint or the like). In another embodiment of the invention, it is possible to use both a specific application server and the object's own server (e.g. the checkpoint and the like).

In the server itself, the invention is implemented for example by means of a computer program to be executed in the server.

The invention is not limited merely to the embodiment examples referred to above, but many modifications are possible within the scope of the inventive idea defined by the claims.

## Claims

1. A method for handling a vehicle in queue number order, the method comprising the steps of:
- receiving a request for reserving a handling;
- determining, in response to the request, a queue number and/or an estimated handling time;
- sending the determined queue number and/or the estimated handling time to the sender of the request;
**characterized in that** the method further comprises the steps of:
- updating the queue number and/or the estimated handling time after determining the original queue number and/or the handling time.

2. The method as defined in claim 1, **characterized in that** the queue number and/or the handling time is updated based on the situation with the queue numbers at that time and/or based on a new request for handling.

3. The method as defined in any of claims 1 or 2, c h a r a c t e r i z e d in that a request for reserving a handling is received from a portable terminal device (4) and/or from a terminal device (5) located at the remote point.

4. The method as defined in any one of preceding claims 1 to 3, **characterized in that** the queue number and/or the handling time is updated in case the handling of the vehicles proceeds more slowly or faster than estimated and/or in case the handling request contains a request for another handling time.

5. The method as defined in any one of preceding claims 1 to 4, **characterized in that** the queue number is updated in case the handling of the vehicles proceeds more slowly or faster than estimated and in case there is a wish to keep the original estimated handling time unchanged.

6. The method as defined in any one of preceding claims 1 to 5, **characterized in that** the updated queue number and/or the updated handling time is sent to the portable terminal device (4); to the terminal device (5) located at the remote point; and/or to an electronic display panel (8).

7. A software product for handling a vehicle in queue number order, **characterized in that** the software product contains program code which, when executed in data processing equipment, has been arranged to perform the method steps presented in any one of method claims 1 to 6.

8. A system for handling vehicles in queue number order, the system comprising:
- means (6, 7) for receiving a request for handling from a terminal device (4, 5), for determining a queue number and/or a handling time, and for sending the determined queue number and/or the estimated handling time to the terminal device (4, 5); **characterized in that**
the means (6, 7) have been arranged to update (15) the queue number and/or the estimated handling time after determining the original queue number and/or the handling time.

9. The system as defined in claim 8, **characterized in that** the means (6, 7) have been arranged to update the queue number and/or the estimated handling time based on the situation with the queue numbers at that time (13, 14) and/or based on a new handling request (11).

10. The system as defined in any one of preceding claims 8 to 9, **characterized in that** the terminal device (4, 5) comprises a portable terminal device (4) and/or a terminal device (5) located at the remote point.

11. The system as defined in any one of preceding claims 8 to 10, **characterized in that** the means (6, 7) have been arranged to update the queue number and/or the handling time in case the handling of the vehicles proceeds more slowly or faster than estimated and/or in case the handling request contains a request for another handling time.

12. The system as defined in any one of claims 8 to 11, **characterized in that** the means (6, 7) have been arranged to update the queue number in case the handling of the vehicles proceeds more slowly or faster than estimated and/or in case there is a wish to keep the original estimated handling time unchanged.

13. The system as defined in any one of claims 8 to 12, **characterized in that** the means (6, 7) have been arranged to send the updated queue number and/or the updated handling time to a portable terminal device (4); to the terminal device (5) of the remote point; and/or to an electronic display panel (8).
